# EUROPEAN PATENT APPLICATION

(11) **EP 1 950 158 A1**
(43) Date of publication of application: **30.07.2008**
(21) Application number: 06781697.5
(22) Date of filing: 26.07.2006
(51) Int. Cl.: B65H 31/00

(54) **IMAGE RECORDING DEVICE**

(30) Priority: 29.07.2005 JP 2005221387
(71) Applicant: Sharp Kabushiki Kaisha, Osaka-shi, Osaka 545-0013 (JP)
(72) Inventor: SHIRAISHI, Kenichi, Nara-shi, Nara 631-0076 (JP); MIYAMOTO, Shigeo, Nara-shi, Nara 630-8326 (JP)
(74) Representative: Zinke, Thomas
(86) International application number: PCT/JP2006/314785
(87) International publication number: WO 2007/013520

(57) **Abstract**

A facsimile machine (10) comprises a machine body (20), a cover (30), a separator (70), and a sheath (61). The machine body (20) includes within it an image forming unit (50) and a sheet passage (51), through which a sheet of paper is conveyed from a sheet inlet (52) via the forming unit (50) to a sheet outlet (53). The sheath (61) covers the machine body (20). The sheet inlet (52) and outlet (53) are arranged in parallel with each other at the top of the machine body (20). The cover (30) pivots on a pivot shaft (31) between an open position, where it holds sheets of paper, and the closed position where it forms part of the sheath (61). The separator (70) pivots on a pivot shaft (71) between an open position, where it separates a blank sheet of paper and a printed sheet of paper, and the closed position where it is housed in the machine body (20).

## Description

### [FIELD OF THE INVENTION]

The present invention relates to an image recorder having a sheet passage the sheet inlet and sheet outlet of which are arranged in parallel with each other at the top of the machine body of the recorder.

### [BACKGROUND OF THE INVENTION]

An image recorder such as a facsimile machine has an image reading unit for reading the image on a document by detecting the light reflected from the document, a document passage through which a document is conveyed from a document inlet via the image reading unit to a document outlet, an image forming unit for forming an image on a sheet such as a sheet of paper, and a sheet passage through which a sheet is conveyed from a sheet inlet via the image forming unit to a sheet outlet.

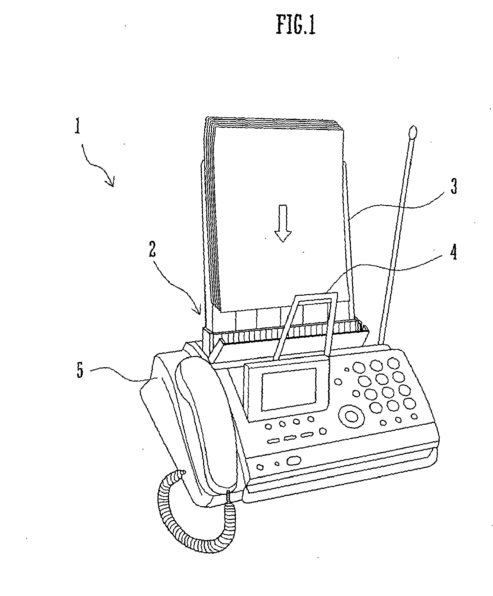

An image recorder of this type has a sheet inlet positioned at its top. As shown in FIG. 1, an image recorder 1 has a feed tray 3 and a press member 4 that are positioned near its sheet inlet 2. The feed tray 3 supports the sheets to be inserted from the inlet 2. The press member 4 prevents the supported sheets from easily falling down. The feed tray 3 and press member 4 are fixed or removably fitted to the machine body 5 of the recorder 1. The feed tray 3 is an essential member for stable sheet feeding.

The press member 4 of an image recorder having a sheet inlet and a sheet outlet that are positioned in parallel with each other at the top of its machine body may be a separator for separating a sheet having no image formed on it and a sheet having an image formed on it. In this case, the press member 4 is an essential member for preventing a sheet having an image formed on it from being inserted again through the inlet.

Another image recorder has a cover that can be opened and closed (for example, see Patent Document 1). The cover serves, in its open position, as a feed tray for supporting sheets and a document tray for supporting documents. The image recorder disclosed by Patent Document 1 has a document inlet and a sheet inlet both of which are positioned at the top of its machine body. The cover of this recorder closes the two inlets in its closed position.
[Patent Document 1] JP-2001-97560A

### [DISCLOSURE OF THE INVENTION]

### [PROBLEMS TO BE SOLVED BY THE INVENTION]

If the feed tray 3 and press member 4 are fixed to the machine body 5, installation of the image recorder 1 requires a large area, so that it cannot be installed in a place without a sufficient space.

When the image recorder 1 to which the feed tray 3 and press member 4 are fitted removably to the machine body 5 is not used, the tray and the member are often removed so that the recorder occupies a smaller area. When this recorder is used, performing document reading and image formation, the feed tray 3 and press member 4 are fitted to it. It is time-consuming and troublesome to fit and remove the feed tray 3 and press member 4.

In the image recorder disclosed by Patent Document 1, the document inlet and the sheet inlet are positioned at the top of the machine body. After this recorder forms an image on a sheet, the sheet is delivered from the front of the machine body. This makes it necessary to provide a space for the delivered sheet in front of the machine body, so that installation of the recorder requires a wide space. As stated above, a sheet having an image formed on it is delivered from the front of this recorder. Therefore, the recorder has no press member (separator), and only its cover, which supports sheets having no images formed on them, can be opened and closed.

The object of the present invention is to provide an image recorder that can, by means of simple operation while it is used, hold a sheet having no image formed on it and a sheet having an image formed on it, with the sheets separated from each other, and that can be small-sized by means of simple operation while the recorder is not used.

### [MEANS FOR SOLVING THE PROBLEMS]

In order to solve the foregoing problems, the image recorder of the present invention has the following structure.
(1) The image recorder comprises a machine body, a sheath, a cover, and a separator. The machine body includes within it an image forming unit for forming an image on a sheet and a sheet passage through which a sheet is conveyed from a sheet inlet via the forming unit to a sheet outlet. The sheath covers the machine body. The cover can pivot on one of its ends between an open position and a closed position. The separator can pivot on one of its ends between an open position and a closed position. The sheet inlet and the sheet outlet are arranged at the top of the machine body perpendicularly to the sides of a sheet to be conveyed and a delivered sheet. In the open cover position, the cover opens the sheet inlet and the sheet outlet and holds at least a sheet to be inserted from the sheet inlet into the sheet passage. In the closed cover position, the cover forms part of the sheath and covers the sheet inlet and the sheet outlet. One end of the separator is positioned between the sheet inlet and the sheet outlet. In the open separator position, the separator separates a sheet to be inserted from the sheet inlet into the sheet passage and a sheet delivered from the sheet outlet. In the closed separator position, the separator is housed in the machine body.
   In this structure, the cover pivots on one of its ends between its open and closed positions, and the separator pivots on one of its ends between its open and closed positions. While the image recorder is used, performing image formation etc., the cover is positioned in its open position, where the cover holds at least a sheet having no image formed on it. In the meantime, the separator is positioned in its open position, where the separator holds a sheet having an image formed on it and separates this sheet and a sheet having no image formed on it. The separator prevents the sheet having an image on it from being inserted again from the sheet inlet into the sheet passage.
   While the image recorder is not used, not performing image formation etc., the cover is positioned in its closed position, where it forms part of the sheath. In the meantime, the separator is positioned in its closed position, where it is housed in the machine body.
(2) The separator may be able to pivot automatically with the cover.
   In this structure, when the cover pivots to its open and closed positions, the separator pivots to its open and closed positions respectively.
(3) The cover may have an extension for extending upstream in the direction in which a sheet to be inserted into the sheet inlet in the open cover position is conveyed.
   In this structure, by extending the cover extension when the cover is in its open position, at least a sheet having no image formed on it is held in a longer and wider area.
(4) The separator may have a protruder capable of protruding upstream in the direction in which a sheet to be inserted into the sheet inlet in the open separator position is conveyed.

In this structure, because one end of the separator is positioned between the sheet inlet and the sheet outlet, the separator separates a sheet having no image formed on it and a sheet having an image formed on it and prevents a sheet having no image on it and held by the cover from falling down. By being protruded when the separator is in its open position, the separator protruder supports up to a higher level a sheet having no image formed on it.

### [EFFECTS OF THE INVENTION]

The present invention brings about the following effects.
(1) By causing the cover to pivot on one of its ends, it is possible to shift the cover between its open and closed positions by means of simple operation. By causing the separator to pivot on one of its ends, it is possible to shift the separator between its open and closed positions by means of simple operation.
   While the image recorder is used, performing image formation etc., the cover is positioned in its open position, where the cover can hold at least a sheet having no image formed on it. In the meantime, the separator is positioned in its open position, where the separator can separate a sheet having no image formed on it and a sheet having an image formed on it. The separation prevents the sheet having an image on it from being inserted again from the sheet inlet into the sheet passage.
   While the image recorder is not used, not performing image formation etc., the cover is positioned in its closed position, where it forms part of the sheath. In the meantime, the separator is positioned in its closed position, where it is housed in the machine body. This reduces the size of the recorder.
   Consequently, while the image recorder is used, it is possible to hold a sheet having no image formed on it and a sheet having an image formed on it, with the sheets separated by simple operation. In addition, while the recorder is not used, it is possible to reduce the size of the recorder by means of simple operation.
(2) The separator can pivot automatically with the cover, so that the operability of the image recorder is further improved.
(3) By extending the cover extension when the cover is in its open position, it is possible to hold in a longer and wider area at least a sheet having no image formed on it. This makes it possible to more stably hold a sheet having no image formed on it, and to more stably insert it into the sheet inlet.
(4) Because one end of the separator is positioned between the sheet inlet and the sheet outlet, the separator can separate a sheet having no image formed on it and a sheet having an image formed on it, and can prevent a sheet having no image on it and held by the cover from falling down. By being protruded when the separator is in its open position, the separator protruder can support up to a higher level a sheet having no image formed on it. This prevents this sheet more reliably from falling down.

### [BRIEF DESCRIPTION OF THE DRAWINGS]

[FIG. 1] A perspective view showing the structure of a conventional image recorder.
[FIG. 2] A perspective view showing the appearance of a facsimile machine according to an embodiment of the image recorder of the present invention.
[FIG. 3] A sectional side view showing the structure of the facsimile machine, with its cover in a closed position.
[FIG. 4] A sectional side view showing the structure of the facsimile machine, with its cover in an open position.
[FIG. 5] A view showing the structure of a connector.
[FIG. 6] A front view schematically showing the structures of the cover and a separator.
[FIG. 7] An enlarged explanatory sectional side view showing part of a facsimile machine according to another embodiment.
[FIG. 8] An enlarged explanatory sectional side view showing part of the foregoing facsimile machine.
[FIG. 9] An enlarged explanatory sectional side view showing part of the foregoing facsimile machine.

### [WHAT IS INDICATED BY REFERENCE NUMERALS]

- 10: facsimile machine (image recorder)
- 20: machine body
- 30: cover
- 31: pivot shaft (one end)
- 32: extension tray (extension)
- 40: image reading unit
- 41: document passage
- 42: document inlet
- 43: document outlet
- 50: image forming unit
- 51: sheet passage
- 52: sheet inlet
- 53: sheet outlet
- 61: sheath
- 70: separator
- 71: pivot shaft (one end)
- 72: sheet holder (protruder)
- 80: connector
- 90: opening lever
- 100: turning member
- 110: spring

### [BEST MODE OF CARRYING OUT THE INVENTION]

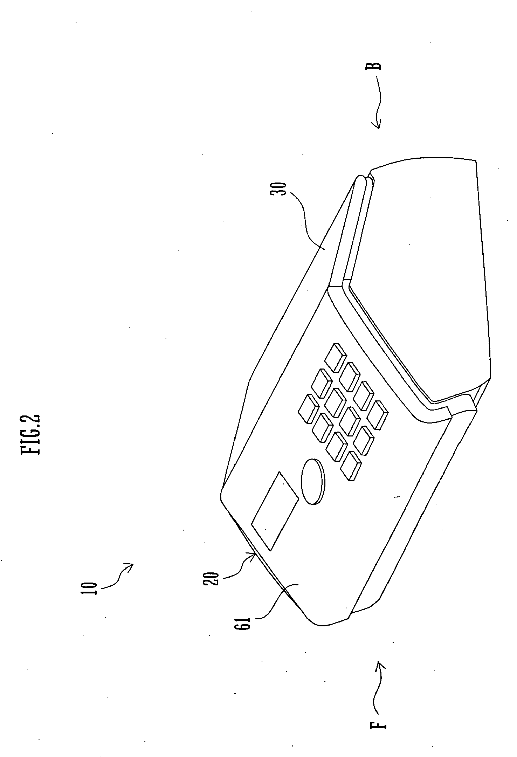

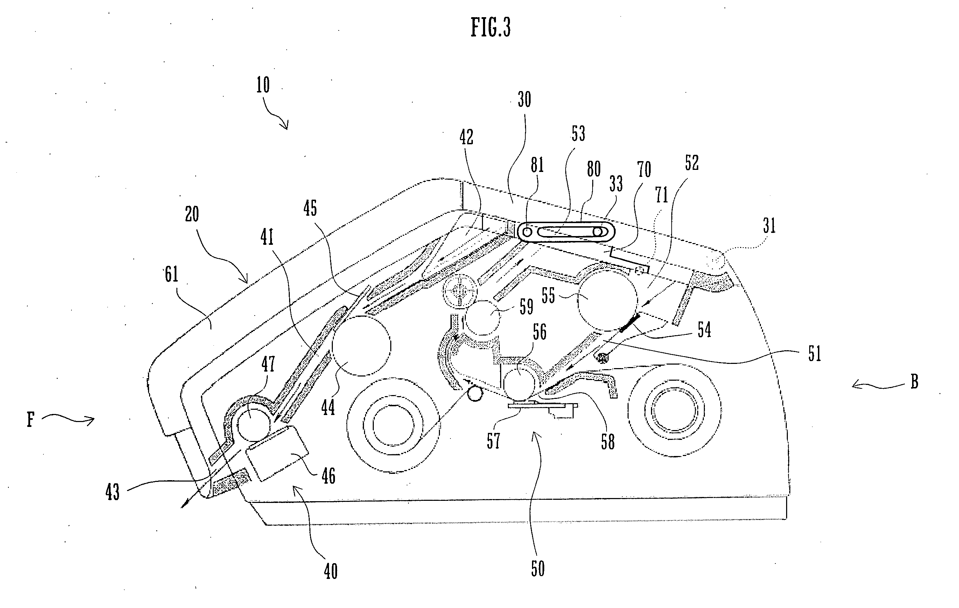

Embodiments of the present invention will be described below with reference to the drawings. FIG. 2 is a perspective view showing the appearance of a facsimile machine 10 according to an embodiment of the image recorder of the invention. FIG. 3 is a sectional side view showing the structure of the machine 10, with its cover in a closed position. In FIG. 3, the left and right sides of the machine 10 are its front F and back B respectively.

The facsimile machine 10 includes a machine body 20, a cover 30, a separator 70, and a sheath 61. The machine body 20 has in it an image reading unit 40 for reading the image on a document, a document passage 41 through which a document is conveyed from a document inlet 42 via the reading unit 40 to a document outlet 43, an image forming unit 50 for forming an image on a sheet of paper or another sheet, and a sheet passage 51 through which a sheet of paper is conveyed from a sheet inlet 52 via the forming unit 50 to a sheet outlet 53. The sheath 61 is the outer covering of the machine body 20.

The sheet passage 51 and separator 70 correspond to the sheet passage and separator, respectively, of the present invention.

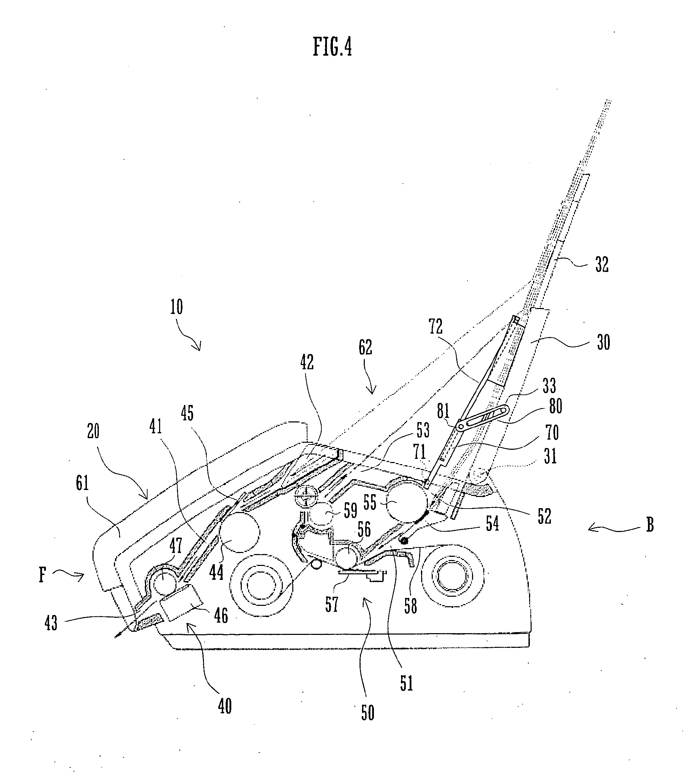

The sheath 61 has an opening 62 (FIG. 4) formed through an upper portion of it. The cover 30 is so fitted as to close the opening 62. The cover 30 can pivot on a pivot shaft 31 between the closed position and an open position. In the closed position, as shown in FIG. 3, the cover 30 closes the opening 62. When the cover 30 is in the open position, as shown in FIG. 4, the opening 62 is open. The pivot shaft 31 is fitted to an edge of the cover 30 and supported on the side of the opening 62 that is adjacent to the back B of the machine body 20.

By causing the cover 30 to pivot on the pivot shaft 31, it is possible to shift the cover 30 between the closed and open positions by means of simple operation. Accordingly, there is no need to fit and remove a feed tray, so that the facsimile machine 10 is high in operability. The cover 30 will be described later on in detail.

The document passage 41 has a document inlet 42 and a document outlet 43. The inlet 42 opens into a portion of the opening 62 that is adjacent to the front F of the machine body 20. The outlet 43 opens in the front F. A document feed roller 44 is positioned midway on the passage 41. A separating rubber plate 45 is positioned opposite the feed roller 44. The documents inserted into the inlet 42 are separated from one another between the feed roller 44 and the rubber plate 45, and only the bottom document is conveyed toward the outlet 43.

An image sensor 46 is positioned downstream from the document feed roller 44 in the direction in which documents are conveyed. A back roller 47 is positioned opposite the sensor 46. The feed roller 44 feeds a document between the sensor 46 and back roller 47. The sensor 46 reads the image on the document, with the back roller 47 pressing on the back side of the document against the sensor 46. The back roller 47 then delivers the document out of the machine body 20 through the document outlet 43. The sensor 46 and back roller 47 are included in the image reading unit 40.

The sheet passage 51 is roughly U-shaped and has a sheet inlet 52 at one of its ends and a sheet outlet 53 at the other end. The inlet 52 opens into a portion of the opening 62 that is adjacent to the back B of the machine body 20. The outlet 53 opens into a portion of the opening 62 that is positioned between the document inlet 42 and sheet inlet 52. In other words, the document inlet 42, sheet inlet 52, and sheet outlet 53 are arranged perpendicularly to the sides of documents the images on which have not been read, blank sheets of paper, and printed sheets of paper. The sheet inlet 52 and sheet outlet 53 correspond to the sheet inlet and sheet outlet respectively of the present invention.

A separating pad 54 and a sheet feed roller 55 are positioned opposite each other on the sheet passage 51 near the sheet inlet 52.

FIG. 4 is a sectional side view showing the structure of the facsimile machine 10, with the cover 30 in the open position. Stacked sheets of paper are inserted into the sheet inlet 52 and held with their front ends in contact with the separating pad 54. As the sheet feed roller 55 rotates, it and the separating pad 54 cooperate to convey only the sheet nearest to it toward the sheet outlet 53.

A platen roller 56 and a thermal head 57 are positioned opposite each other downstream from the sheet feed roller 55 in the direction in which sheets of paper are conveyed. An ink film 58 is positioned between the platen roller 56 and thermal head 57 and fed in this direction at the same speed as sheets of paper are conveyed.

A sheet of paper is fed into the position between the platen roller 56 and ink film 58. The thermal head 57 heat-transfers ink on the film 58 to the sheet, thereby forming an image on the sheet. The platen roller 56 and thermal head 57 are included in the image forming unit 50.

A sheet delivery roller 59 is positioned downstream from the platen roller 56 in the direction in which sheets of paper are conveyed. The delivery roller 59 delivers the sheet upward through the sheet outlet 53.

While the facsimile machine 10 is used, performing image reading, image formation, etc., the cover 30 is positioned in the open position, as shown in FIG. 4. While the machine 10 is not used, not performing image reading, image formation, etc., the cover 30 is positioned in the closed position, as shown in FIG. 3.

In the closed position, the cover 30 closes the opening 62 of the sheath 61, covering the document inlet 42, sheet inlet 52, and sheet outlet 53. In this position, the cover 30 forms part of the sheath 61, without protruding from the sheath. The sheath 61 covers the image reading unit 40, document passage 41, image forming unit 50, and sheet passage 51.

The separator 70 is spaced from the cover 30 toward the front F of the machine body 20 perpendicularly to the sides of blank and printed sheets of paper. The separator 70 has a pivot shaft 71 fitted to one of its edges. The shaft 71 is supported between the sheet inlet 52 and sheet outlet 53. The separator 70 pivots on the shaft 71.

By causing the separator 70 to pivot on the pivot shaft 71, it is possible to shift the separator 70 between an open position and a closed position by means of simple operation.

Because the pivot shaft 71 of the separator 70 is positioned between the sheet inlet 52 and sheet outlet 53, the separator can separate blank and printed sheets of paper and prevent the blank sheets on the cover 30 from falling down.

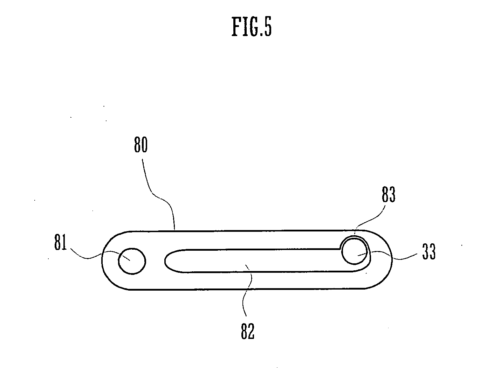

The separator 70 is connected to the cover 30 by a connector 80 and supports one end 81 of the connector 80, the structure of which is shown in FIG. 5. The connector 80 has a slot 82 and a recess 83. The recess 83 is formed in the upper side of the end of the slot 82 that is away from the connector end 81. The cover 30 has a protrusion 33, which is in slidable engagement with the slot 82.

When the cover 30 is in its closed position, as shown in FIG. 3, the separator 70 is positioned under the cover 30 and housed in the machine body 20. When the cover 30 pivots to its open position, as shown in FIG. 4, the force by which it pivots toward this position is transmitted through the connector 80 to the separator 70. This causes the separator 70 to pivot with the cover 30 and shift to its open position.

When the cover 30 and separator 70 are in their respective open positions, the cover protrusion 33 engages with the connector recess 83, so that a space is kept between the cover 30 and separator 70.

In the open separator position, the separator 70 separates a blank sheet of paper to be inserted from the sheet inlet 52 into the sheet passage 51 and a printed sheet of paper delivered from the sheet outlet 53 and prevents the printed sheet from being inserted again into the inlet 52.

When the cover 30 pivots from its open position to its closed position, it pushes the front edge of the separator 70, so that the separator pivots from its open position to its closed position automatically with the cover 30.

Because the separator 70 can pivot automatically with the cover 30, the operability of the facsimile machine 10 is further improved.

In the open cover position, the cover 30 opens the document inlet 42, sheet inlet 52, and sheet outlet 53 and holds the documents to be inserted into the inlet 42, the sheets to be inserted into the inlet 52, and the sheets delivered from the outlet 53.

Specifically, the blank sheets to be inserted into the sheet inlet 52 are supported directly by the cover 30. Lower portions of the sheets printed and delivered from the sheet outlet 53 are supported by the separator 70, while upper portions of them are supported by the cover 30 indirectly with the blank sheets interposed between the cover and the printed and delivered sheets. The documents to be inserted into the document inlet 42 are supported by the cover 30 indirectly with the blank and printed sheets interposed between the cover and the documents.

As stated above, by being positioned in its open position, the cover 30 serves as a document tray, a feed tray, and a delivery tray, which support documents, blank sheets of paper, and printed sheets of paper, respectively.

By being positioned in the open cover position while the facsimile machine 10 is used, performing image formation etc., the cover 30 holds documents the images on which have not been read, blank sheets of paper, and printed sheets of paper. By being positioned in the open separator position while the machine 10 is used, the separator 70 separates the blank and printed sheets so as to prevent the printed sheets from being inserted again through the sheet inlet 52 into the sheet passage 51.

While the facsimile machine 10 is not used, not performing image formation etc., the cover 30 forms part of the sheath 61 by being positioned in its closed position, and the separator 70 is housed in the machine body 20 by being positioned in its closed position. This reduces the size of the machine 10.

This makes it possible to hold a blank sheet of paper and a printed sheet of paper, with these sheets separated from each other by means of simple operation, while the facsimile machine 10 is used. This also makes it possible to reduce the size of the machine 10 by means of simple operation while the machine is not used.

By positioning the cover 30 in its closed position, it is possible to cover all of the document inlet 42, sheet inlet 52, and sheet outlet 53 with the cover 30 so as to protect them from dust. This makes it possible to prevent misfeed of not only documents the images on which have not been read and blank sheets of paper but also printed sheets of paper. While the facsimile machine 10 is not used, it is possible to reduce the area occupied by the machine, by positioning the cover 30 and separator 70 in their respective closed positions.

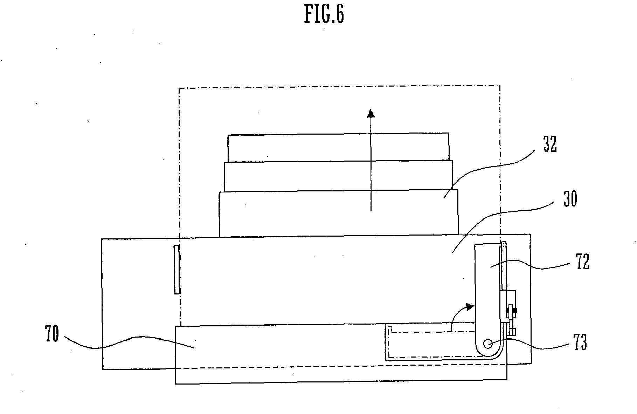

FIG. 6 is a front view schematically showing the structures of the cover 30 and separator 70. The cover 30 has an extension tray 32, which corresponds to the extension of the present invention. When the cover 30 is in its open position, the tray 32 can extend upstream in the direction in which blank sheets of paper are conveyed. By way of example, the tray 32 consists of three members and can extend by three stages.

By extending the extension tray 32 when the cover 30 is in its open position, it is possible to hold at least blank sheets of paper in a longer and wider area. This makes it possible to hold blank sheets of paper more stably and insert them more stably into the sheet inlet 52.

The separator 70 has a sheet holder 72, which corresponds to the protruder of the present invention. The separator 70 extends perpendicularly to the direction in which sheets of paper are conveyed (extends across the sheets). One end of the separator 70 supports one end 73 of the holder 72. The holder 72 can pivot on its supported end 73 between a horizontal position and a vertical position. In the horizontal position, the holder 72 does not increase the area of the separator 70 as viewed perpendicularly to the sides of sheets of paper. In the vertical position, the holder 72 prevents the blank sheets on the cover 30 from falling toward the front F of the machine body 20.

By protruding the sheet holder 72 into the vertical position when the separator 70 is in its open position, it is possible to support blank sheets of paper up to a higher level with the holder 72. This prevents the blank sheets more reliably from falling down.

In the foregoing embodiment, only one sheet holder 72 is fitted to one end of the separator 70. Another sheet holder might be fitted to the other end of the separator 70.

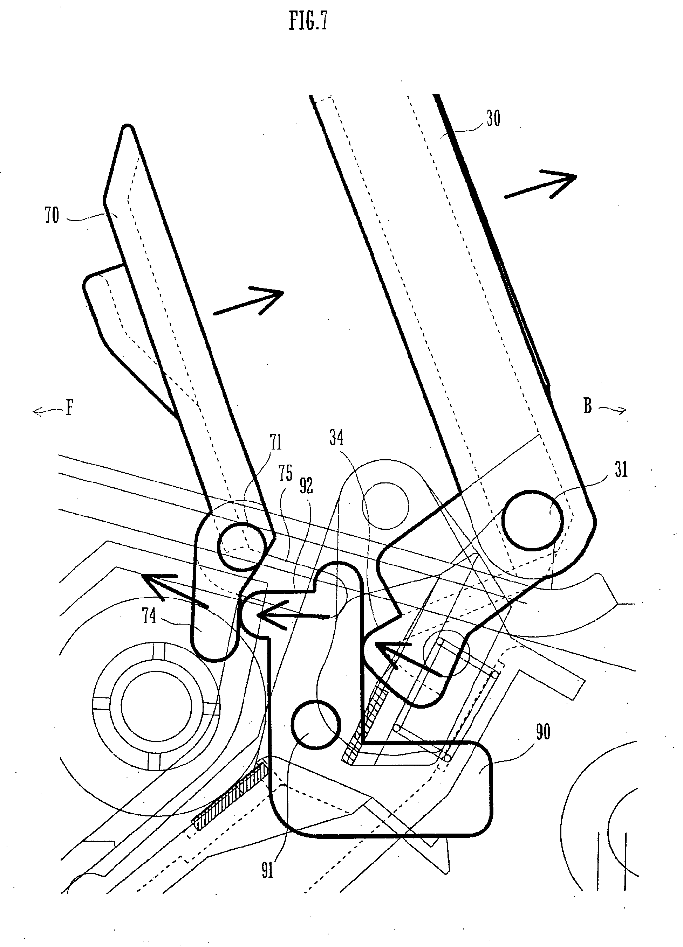

FIGS. 7 - 9 are enlarged explanatory sectional side views showing part of a facsimile machine 10A according to another embodiment. This machine 10A is similar in structure to the machine 10, except that the former has a mechanism interlocking the cover 30 and separator 70.

As shown in FIG. 7, the cover 30 of the facsimile machine 10A is roughly L-shaped with its corner supported on the pivot shaft 31 of this machine. The cover 30 has a lever 34 extending from the vicinity of the pivot shaft 31 toward the front F when the cover 30 is in its open position.

The separator 70 of the facsimile machine 10A has a first lever 74 and a second lever 75. The first lever 74 extends from the vicinity of the pivot shaft 71 of the machine 10A away from the sheet holder 72. The second lever 75 extends toward the back B roughly perpendicularly to the first lever 74.

The facsimile machine 10A has an opening lever 90, which is positioned between and below the cover 30 and separator 70. The opening lever 90 can pivot on a pivot shaft 91. The top 92 of the opening lever 90 is positioned between the lever 34 of the cover 30 and the first lever 74 of the separator 70.

When the cover 30 pivots clockwise on the pivot shaft 31 from its closed position toward its open position, its lever 34 pushes the top 92 of the opening lever 90 toward the front F, causing the opening lever 90 to pivot counterclockwise on the pivot shaft 91. This forces the lever top 92 to shift toward the front F, pushing the first lever 74 of the separator 70 in this direction, so that the separator 70 pivots clockwise on the pivot shaft 71 from its closed position toward its open position.

In other words, when the cover 30 pivots from its closed position toward its open position, the force by which the cover 30 pivots is transmitted through the opening lever 90 to the separator 70, so that the separator pivots from its closed position toward its open position automatically with the cover 30.

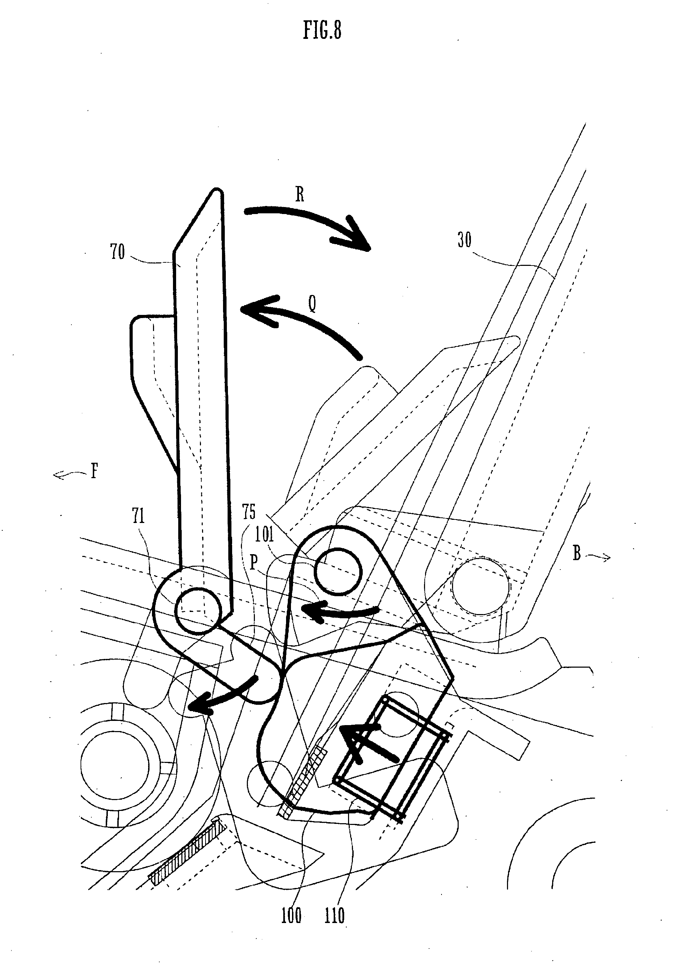

As shown in FIG. 8, the facsimile machine 10A also has a turning member 100, which can turn on a turning shaft 101 and is biased by a spring 110 clockwise (in the direction P) in FIG. 8.

The turning member 100 pushes the second lever 75 of the separator 70 toward the front F, thereby forcing the separator 70 to pivot clockwise in FIG. 8. Consequently, when the separator 70 is in its open position, it presses, with a preset force against the cover 30, the blank sheets held by the cover. This prevents the blank sheets from falling toward the front F.

A user supplies blank sheets of paper by manually turning the separator 70 counterclockwise (in the direction Q) in FIG. 8 against the force of the spring 110. After supplying the blank sheets, the use releases or loosens his/her hold on the separator 70, so that the separator pivots clockwise (in the direction R) in FIG. 8 by the force of the spring 110 and presses the sheets against the cover 30.

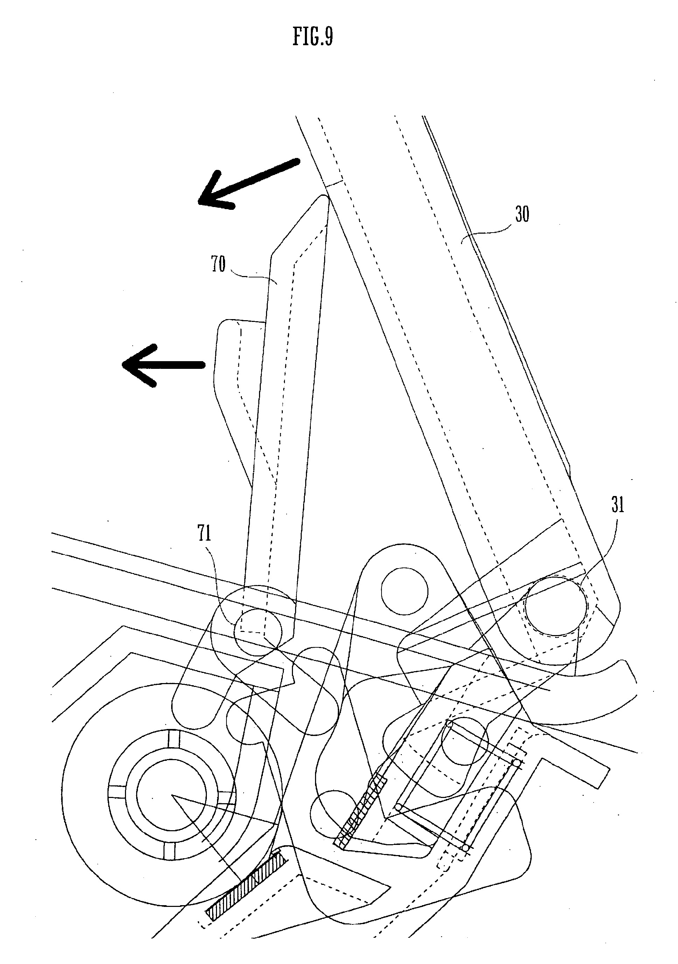

When the cover 30 pivots from its open position toward its closed position, as shown in FIG. 9, it pushes the top of the separator 70, so that the separator pivots from its open position toward its closed position automatically with the cover 30.

Because the separator 70 can be caused to pivot automatically with the cover 30, it is possible to open and close the separator 70 only by opening and closing the cover 30 when the facsimile machine 10A is used and is not used respectively. This improves the operability of the machine 10A.

Because the mechanism interlocking the separator 70 with the cover 30 is housed in the machine body 20, this mechanism is protected from dust. While the facsimile machine 10A is used, the watcher and the user hardly see the interlocking mechanism, so that they are not impressed by this machine as complicated.

The image recorder 10 can form images on not only sheets of paper but also other sheets such as OHP films.

## Claims

1. An image recorder comprising:
a machine body including therewithin an image forming unit for forming an image on a sheet and a sheet passage through which the sheet is conveyed from a sheet inlet via the forming unit to a sheet outlet;
a sheath covering the machine body;
a cover capable of pivoting on one end thereof between an open cover position and a closed cover position; and
a separator capable of pivoting on one end thereof between an open separator position and a closed separator position;
the recorder being **characterized in that** the sheet inlet and the sheet outlet are arranged at the top of the machine body perpendicularly to the sides of a sheet to be conveyed and a delivered sheet;
the recorder being further **characterized in that**, in the open cover position, the cover opens the sheet inlet and the sheet outlet and holds at least a sheet to be inserted from the sheet inlet into the sheet passage;
the recorder being further **characterized in that**, in the closed cover position, the cover forms part of the sheath and covers the sheet inlet and the sheet outlet;
the recorder being further **characterized in that** the one end of the separator is positioned between the sheet inlet and the sheet outlet;
the recorder being further **characterized in that**, in the open separator position, the separator separates a sheet to be inserted from the sheet inlet into the sheet passage and a sheet delivered from the sheet outlet;
the recorder being further **characterized in that**, in the closed separator position, the separator is housed in the machine body of the recorder.

2. An image recorder as described in claim 1, further **characterized in that** the separator pivots automatically with the cover.

3. An image recorder as described in claim 1, further **characterized in that** the cover has an extension for extending upstream in the direction in which a sheet to be inserted into the sheet inlet in the open cover position is conveyed.

4. An image recorder as described in claim 1, further **characterized in that** the separator has a protruder capable of protruding upstream in the direction in which a sheet to be inserted into the sheet inlet in the open separator position is conveyed.
